# EUROPÄISCHE PATENTSCHRIFT

(11) **EP 0 461 561 B1**
(45) Veröffentlichungstag und Bekanntmachung des Hinweises auf die Patenterteilung: **13.04.1994**
(21) Anmeldenummer: 91109370.6
(22) Anmeldetag: 07.06.1991
(51) Int. Cl.: A63B 49/10, A63B 49/02, B29C 67/14

(54) **Schläger, insbesondere Tennis- oder Squashschläger**
Racket, especially tennis or squash racket
Raquette, en particulier de tennis ou de squash

(30) Priorität: 12.06.1990 DE 4018818
(43) Veröffentlichungstag der Anmeldung: 18.12.1991
(73) Patentinhaber: Reinhardt, Josef, Dr. med., 79238 Ehrenkirchen (DE)
(72) Erfinder: Reinhardt, Josef, Dr. med., 79238 Ehrenkirchen (DE)
(74) Vertreter: Schmitt, Hans, Dipl.-Ing.

(56) Entgegenhaltungen:
- US-A- 3 993 308
- US-A- 4 361 533

## Beschreibung

Die Erfindung betrifft einen Schläger, insbesondere Tennis- oder Squashschläger, mit einem Griff und einem aus zwei parallele Hohlprofile aufweisenden Rahmen, wobei die beiden Hohlprofile durch einen Verbindungssteg derart zusammengehalten sind, daß an der Außenseite des Rahmens eine nutförmige Vertiefung gebildet ist.

Die Erfindung betrifft ferner ein Verfahren zur Herstellung eines derartigen Schlägers und außerdem eine Vorrichtung zur Durchführung dieses Verfahrens.

Ein derartiger Schläger ist aus der US-A-4 361 533 bekannt. Die durch einen Steg verbundenen Hohlprofile werden dabei in einem aufwendigen Verfahren mit mehreren in eine Form einzulegenden Hilfsteilen gebildet. Im Querschnitt sind die beiden quer zur Bespannungsebene einander benachbarten parallelen Hohlprofile durch einen etwa in ihrer Mitte angeordneten Steg verbunden, so daß nicht nur an der Außenseite, sondern auch der Innenseite des Rahmens jeweils eine nutförmige Vertiefung vorhanden ist. Die den Rahmen bildenden Hohlprofile gehen dabei im Bereich des Herzens des Schlägers in zwei parallele Stege über, die zu dem Griff zusammengefaßt werden müssen. Zumindest an der Außenseite läuft also die Nut zwischen den Hohlprofilen nicht um den gesamten Rahmen um, so daß ein der Dämpfung dienende Saitenwand in diesem Bereich unterbrochen sein muß.

Somit läßt sich allenfalls eine begrenzte Schwingungsdämpfung erzielen, die insbesondere am Übergang vom Griff in den Rahmen, wo solche Schwingungen sich auf die Hand des Benutzers fortsetzen können, völlig entfallen muß.

Der Erfindung liegt deshalb die Aufgabe zugrunde, einen Schläger der eingangs erwähnten Art zu schaffen, bei dem die Vorteile einer hohen Stabilität des Rahmens durch zwei ihn bildende Hohlprofile erhalten bleiben und dennoch eine bessere Schwingungsdämpfung ermöglicht wird.

Die Lösung dieser Aufgabe besteht darin, daß die beiden Hohlprofile oder Schläuche über zwei eine Herzbrücke des Schlägers bildende Griffteile zusammengeführt sind und in dem Bereich der Herzbrücke der zwischen den Hohlprofilen befindliche Abstand als durchgehende Öffnung freigelassen ist und daß ein in der nutförmigen Vertiefung an der Rahmen-Außenseite befindliches Saiten- oder Hülsenband an der gesamten Außenseite des Rahmens durch die Öffnungen der Herzbrücke hindurch umläuft.

Bei einem derartigen Schläger wird nicht nur ein zweckmässiger Übergang vom Rahmen zu dem Griffbereich über eine Herzbrücke geschaffen, sondern gleichzeitig durch die an dieser Herzbrücke befindlichen Öffnungen ermöglicht, daß das Saiten- oder Hülsenband am gesamten Außenumfang des Rahmens angeordnet ist, also auch im Bereich des Überganges von dem Rahmen zu dem Handgriff wirksam wird. Außerdem wird die Stabilität des Rahmens selbst vergrößert, weil er eine umlaufende, in sich geschlossene Form haben kann, an die der Griff über eine an sich bekannte Herzbrücke so angeschlossen ist, daß die Kräfte besser übertragen werden, als wenn die Rahmenprofile jeweils im Bereich des Überganges zu dem Griff nach außen in eine parallele Position zueinander geformt sind. Die Herzbrücke kann dann mit ihren Stegen mit einem entsprechenden Abstand zueinander an dem Rahmen angreifen und somit eine gute Stabilität auch in Richtung der Bespannungsebene erzielen, so daß bei allen denkbaren Schlägen und Reaktionskräften von vorneherein mit weniger Schwingungen zu rechnen ist, die zudem durch das umlaufende Saitenband bestmöglich gedämpft werden.

Eine Ausgestaltung der Erfindung von ganz erheblicher Bedeutung kann darin bestehen, daß der die beiden Hohlprofile verbindende und auf Abstand haltende Steg - dessen Querschnitt quer zur Bespannungsebene zwischen den beiden Hohlprofilen verläuft - etwa in Fortsetzung des Querschnittes der der Rahmenmitte zugewandten inneren Begrenzung der Hohlprofile verläuft und die innere Begrenzung des Rahmens im Bereich der Nut und den Nutengrund bildet und daß die Lochungen zum Verankern der Saiten durch diesen Steg etwa in Saitenrichtung verlaufen. Die Lochungen für die Saiten befinden sich somit unmittelbar an der äußeren Grenze der Bespannung, da der Steg in diesem Bereich und nicht demgegenüber und gegenüber den Hohlprofilen weiter nach außen versetzt umläuft. Gleichzeitig wird dadurch eine größtmögliche Tiefe der Nut erreicht, deren Grund von diesem die beiden Hohlprofile verbindenden und ihren Abstand überbrückenden Steg gebildet wird. Entsprechend stark und dick kann das dämpfende Saitenband sein.

Dabei ist es vorteilhaft, wenn die Nut durch das schwingungsdämpfende Saitenband ausgefüllt ist. Da die Nut relativ tief ist, kann bei ihrer vollständigen Ausfüllung durch ein Saitenband eine entsprechend gute Schwingungsdämpfung erzielt werden, was vor allem auch im Bereich der Herzbrücke, das heißt der Verbindung zwischen Rahmen und Griff, vorteilhaft ist.

Eine zweckmäßige Konstruktion des Schlägers kann vorsehen, daß der die Nut begrenzende, den inneren Rahmen bildende Steg ein geformtes, zwei voneinander beabstandete, die Hohlprofile bildende Schläuche wenigstens teilweise umschließendes, eine Brücke zwischen den beiden Schläuchen bildendes Kunststoffband, insbesondere ein Graphit-Epoxy-Band, ist. Auf diese Weise ist es möglich, den Schläger und vor allem seinen Rahmen aus zwei vorgefertigten Schläuchen und einem entsprechenden Kunststoffband zusammenzufügen und beispielsweise in einer Form unter Wärmeeinwirkung sowie eventueller Druck-Beaufschlagung fest zu verbinden und zu dem Schläger zu formen. Vor allem ist es dabei dann möglich, die Schläuche so zu führen, daß sie die Herzbrückenstege bilden und in einen Griff übergehen, trotzdem aber auch den Rahmen in diesem Bereich in wesentlichen ununterbrochen umlaufen zu lassen, wobei vor allem das den Steg bildende Band die geschlossene Rahmenform erhalten kann.

Ein Verfahren zur Herstellung eines Schlägers der vorbeschriebenen Art kann dadurch gekennzeichnet sein, daß ein Band als Verbindungssteg oder Brücke und zwei in Berührkontakt mit diesem befindliche, durch eine Zwischenplatte oder dergleichen einer Form auf Distanz gehaltene Schläuche in eine Form eingelegt werden, wobei ein erstes Formteil den einen umgebogenen Rand des Bandes und einen in die Rundung dieses Bandes eingelegten Schlauch aufnimmt und eine Einlegeplatte die Oberseite dieses Schlauches gegenüber einem dem Schlauch benachbarten Absatz abdeckt und daß der zweite Schlauch auf die Oberseite der Einlegeplatte gelegt und von dem überstehenden Randbereich des Bandes zumindest teilweise umschlossen wird, wonach ein zweites Formteil den über der ersten Form und der Einlegeplatte überstehenden Bereich des Bandes und des zweiten Schlauches abdeckt, daß danach beide Schläuche aufgeblasen werden und unter Druck und Wärme gesetzt werden. Dadurch werden dann die aus geeignetem Kunststoff oder Werkstoff bestehenden Teile miteinander verbunden, insbesondere verschweißt.

Eine Vorrichtung zur Durchführung des Verfahrens kann dadurch gekennzeichnet sein, daß sie eine untere Form mit einer Vertiefung zur Aufnahme des einen Randbereiches des inneren Rahmens oder Steges und eines Schlauches aufweist, wobei diese innere Form in dem Bereich, in dem der innere Rahmen den späteren Steg bildet, eine Erhöhung gegenüber dem gegenüberliegenden Rand der den ersten Schlauch aufnehmenden Vertiefung hat, daß eine Einlegeplatte den Niveauunterschied innerhalb dieser Form überbrückt und daß eine zweite Form mit einer Vertiefung zur Aufnahme des zweiten Schlauches und des diesen zumindest teilweise umhüllenden Randbereiches des Bandes passend zu der ersten Form vorgesehen ist. Somit ist sichergestellt, daß die beiden die Hohlprofile des fertigen Schlägers bildenden Schläuche in einem richtigen Abstand zueinander zusammen mit dem den späteren Steg bildenden Band plaziert und danach Wärme und Druck ausgesetzt werden können, um zu dem erfindungsgemäßen Schläger zusammengefügt zu werden.

Die zweite Form kann eine zusätzliche Einlegeplatte aufweisen, die den Berührbereich des Bandes mit dem zweiten Schlauch seitlich beaufschlagt und vorzugsweise mittels Paßstiften oder dergleichen an der unteren Form fixierbar ist. Dadurch kann der Steg auch im Bereich des höherliegenden Schlauches an diesen angedrückt gehalten werden.

Es sei noch erwähnt, daß der Schläger Deckel zum Verschliessen der Öffnungen in der Herzbrücke aufweisen kann. Dadurch erhält er ein insgesamt geschlossenes Aussehen, obwohl das dämpfende Saitenband am gesamten Umfang des Rahmens, auch im Griffbereich, angeordnet ist.

Insgesamt ergibt sich ein Schläger mit einer Nut, die den saitentragen Teil des Schlägers, also den Rahmen, ohne Unterbrechung umläuft, so daß einerseits die Löcher für die Saiten an allen Stellen möglichst kurz sind und ungefähr in Saitenrichtung durch den den Nutengrund bildenden Steg verlaufen können. Außerdem kann in die Nut ein wesentlich dickeres, weicheres Saitenband eingelegt werden, was eine bessere Schwingungsdämpfung der Saiten und auch des Rahmens zur Folge hat, zumal die Saiten die Hohlprofile oder die Übergänge zu dem Griff nirgens berühren. Außerdem erlaubt die erfindungsgemäße Konstruktion eine Einzelaufhängung der Saiten.

Nachstehend ist ein Ausführungsbeispiel der Erfindung anhand der Zeichnungen näher beschrieben. Es zeigt in zum Teil schematisierter Darstellung:
- Fig. 1: eine Aufsicht eines Schlägers auf die Bespannungsebene,
- Fig. 2: eine Seitenansicht des erfindungsgemäßen Schlägers mit Blick auf die zwischen zwei übereinander parallel umlaufenden Hohlprofilen angeordnete Nut,
- Fig. 3: einen Querschnitt durch den Schlägerrahmen gem. der Schnittlinie A-B in Fig. 1,
- Fig. 4: eine der Fig.3 entsprechende Darstellung, wobei in die Nut ein Hülsen- oder Saitenband eingelegt ist,
- Fig. 5: eine der Fig.4 entsprechende Darstellung mit einer zur Bespannung des Schlägers gehörenden Saite,
- Fig. 6: eine schaubildliche Teilansicht eines erfindungsgemäßen Schlägers im Bereich der den Übergang vom Rahmen zum Griff bildenden Herzbrücke sowie
- Fig.7 bis Fig.18: eine Vorrichtung zur Herstellung eines erfindungsgemäßen Schlägers in einzelnen Phasen seines Herstellungsverfahrens.

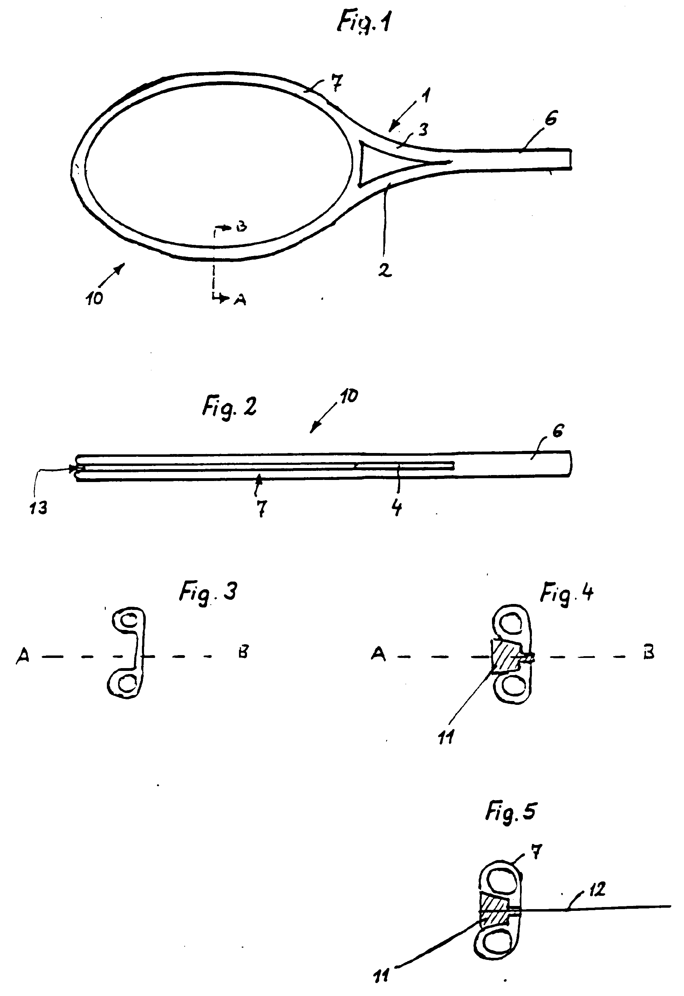

Fig. 1 und 2 zeigt einen Schläger 10 mit einem doppelten Rahmen 7, das heißt einem zwei Hohlprofile oder Schläuche aufweisenden Rahmen 7, einem Griff 6 und einer dazwischen befindlichen, Griffteile 2 u.3 als Verbindungsstege zwischen Rahmen 7 und Griff 6 aufweisender Herzbrücke 1.

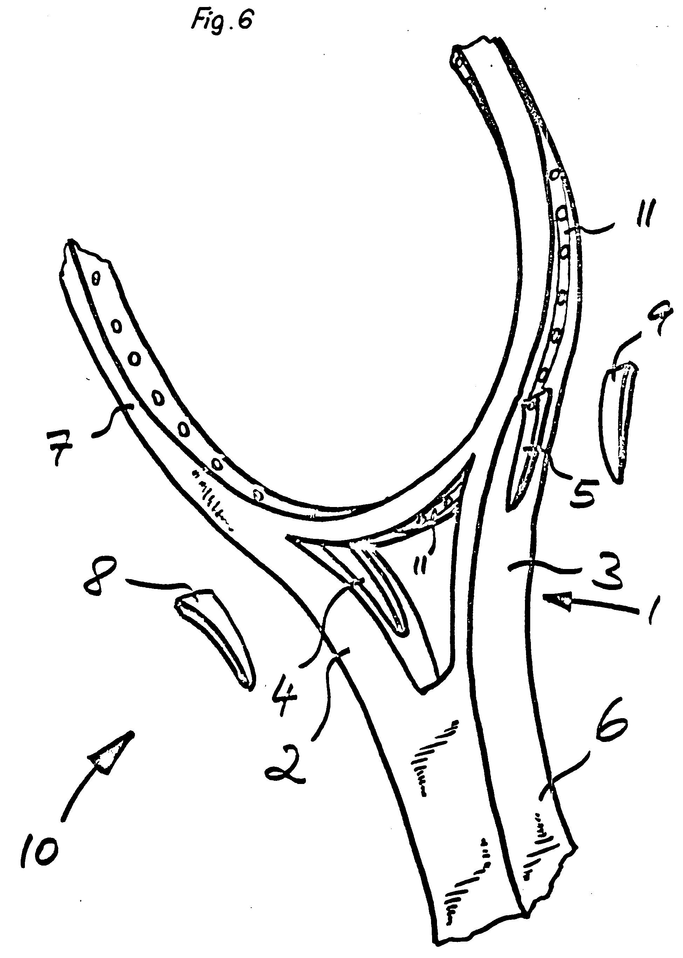

Der Rahmen 7 ist als doppelter Rahmen aus zwei parallelen Hohlprofilen oder Schläuchen gebildet und weist außenseitig gemäß den Fig. 2 bis 5 eine umlaufende durchgehende Nut 13 auf. In dieser Nut 13 ist gemäß Fig. 4 u.5 ein Hülsenband oder Dämpfungs- oder Saitenband 11 eingesetzt. In Fig.5 erkennt man dabei auch noch eine Saite 12 der Schlägerbespannung.

Aus der perspektivischen Darstellung einer Teilansicht des Schlägers 6 insbesondere im Bereich der Herzbrücke 1 erkennt man, daß der Griff 6 sich in Richtung des Rahmens 7 des Schlägers 10 in zwei Griffteile 2 u.3 aufweitet, die somit eine gute Kraftübertragung zwischen Rahmen 7 und Griff 6 erlauben. Die beiden Griffteile 2 u.3 bilden die Herzbrücke 1 des Schlägers 10. Sie sind mit seitlichen, durch die Griffteile 2 und 3 durchgehenden Öffnungen 4 und 5 versehen. Diese seitlichen Öffnungen 4 und 5 sind mittels Deckeln 8 und 9 verschließbar. Hierzu sind bei einem möglichen Ausführungsbeispiel der Erfindung die Begrenzungswände der Öffnungen 4 und 5 einerseits und die schmalen Seiten der Deckel 8 und 9 andererseits mit - in der Zeichnung nicht näher dargestellten - Vertiefungen beziehungsweise Erhöhungen versehen, so daß die Deckel 8 und 9 in die Öffnungen 4 und 5 eingeschnappt oder eingerastet werden können.

Aufgrund dieser Öffnungen 4 und 5 kann das Hülsen- oder Saitenband 11 an der Außenseite des Rahmens fortlaufend angebracht werden, da es durch diese Öffnungen 4 und 5 der Herzbrücke 1 hindurchlaufen kann.

Die gleichfalls durchgängig um den Rahmen 7 geführte Nut 13 wird - wie in den Fig. 1 bis 5 angedeutet - durch zwei Schläuche begrenzt, die durch einen inneren Rahmen oder Steg miteinander verbunden sind, der an der Innenseite des Rahmens im Bereich der Saiten 12 etwa tangential zu den beiden Hohlprofilen oder Schläuchen als innere Rahmenbegrenzung angeordnet ist. Der Steg trennt beziehungsweise verbindet also die beiden im Ausführungsbeispiel deckungsgleichen Schläuche und bildet die innere Begrenzung der Nut, also den Nutengrund. Aus Fig.6 wird deutlich, daß durch diese Schläuche oder Hohlprofile im Herzteil 1 zwei getrennte Arme oder Stege 2 und 3 entstehen, durch welche über die Öffnungen 4 und 5 die Nut 13 und somit auch das Saitenband 11 hindurchgeführt wird. Im Griffteil 6 vereinigen sich die Schläuche oder Hohlprofile zum Griff 6.

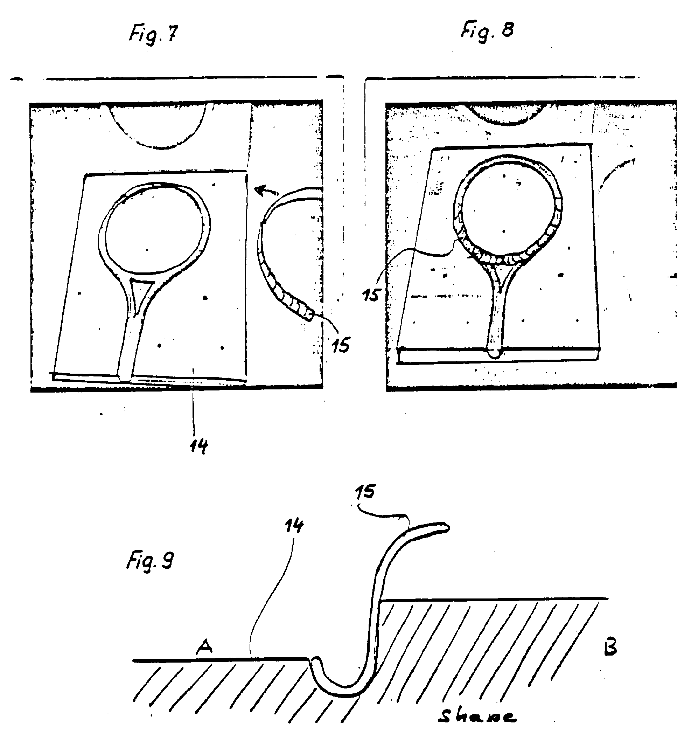

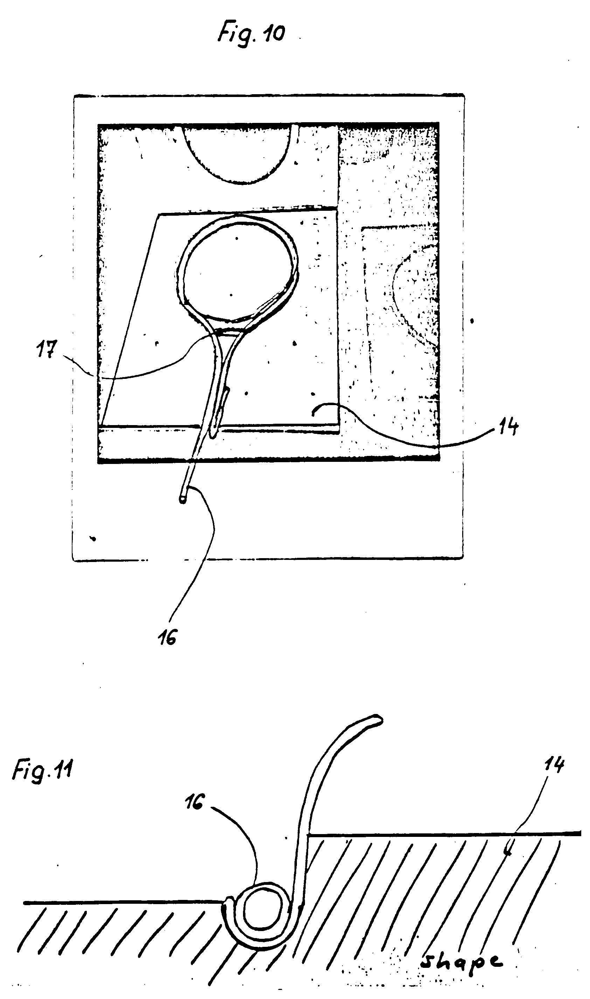

In den Figuren 7 und 8 sowie im Schnitt gemäß Fig. 9 ist eine Form 14 zum Herstellen eines Schlägers 10 dargestellt. Dabei ist das Einlegen des durch den späteren Steg gebildeten inneren Rahmens erkennbar, der durch ein Graphit-Epoxyd-Band gebildet wird, welches die Brücke zwischen den beiden Schläuchen oder Hohlprofilen und die innere Begrenzung der Nut 13 bildet. Dabei ist dieser innere Rahmen oder Steg beziehungsweise das diesen später bildende Band mit 15 bezeichnet.

Die Figuren 10 u.11 zeigen das Einlegen eines ersten Graphit-Epoxyd-Schlauches und eines im Bereich der Herzbrücke 1 verlaufenden Steges 17, der durch ein kurzes, mit Schaumstoff gefülltes Schlauchteil gebildet sein kann und den umlaufenden Rahmenbereich im Bereich der Herzbrücke 1 bildet.

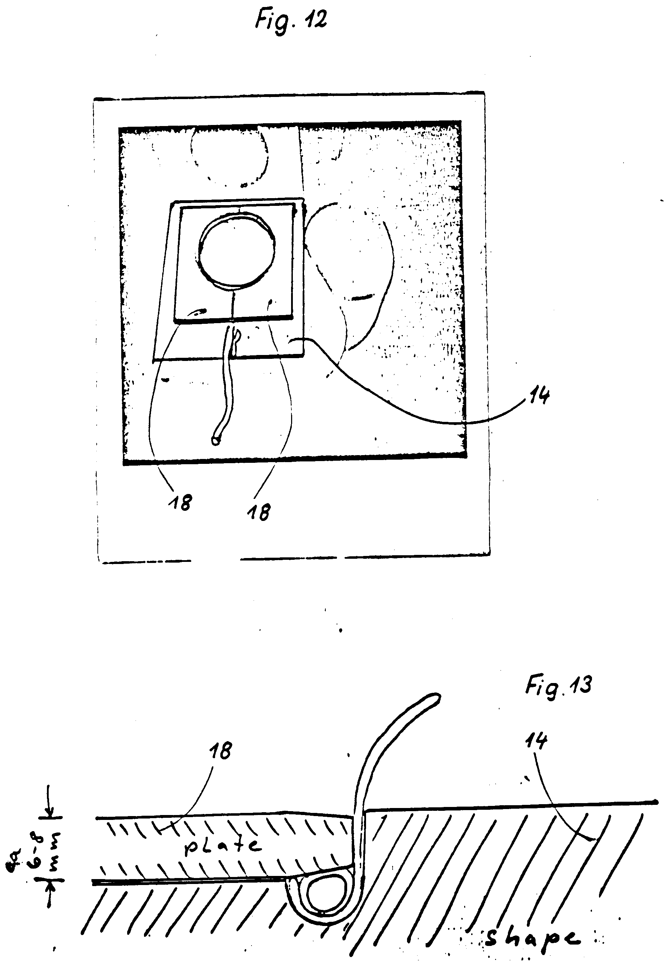

In den Figuren 12 u. 13 erkennt man das Einlegen zweier beweglicher und hier als Einlegeplatten 18 bezeichneter Platten, die durch ihre innere Form die Schläuche oder Hohlprofile auf Distanz halten, die innere Form der späteren umlaufenden Nut 13 ausbilden und im Herzteil 1 die Schläuche zur Bildung der seitlichen Öffnungen 4,5 trennen.

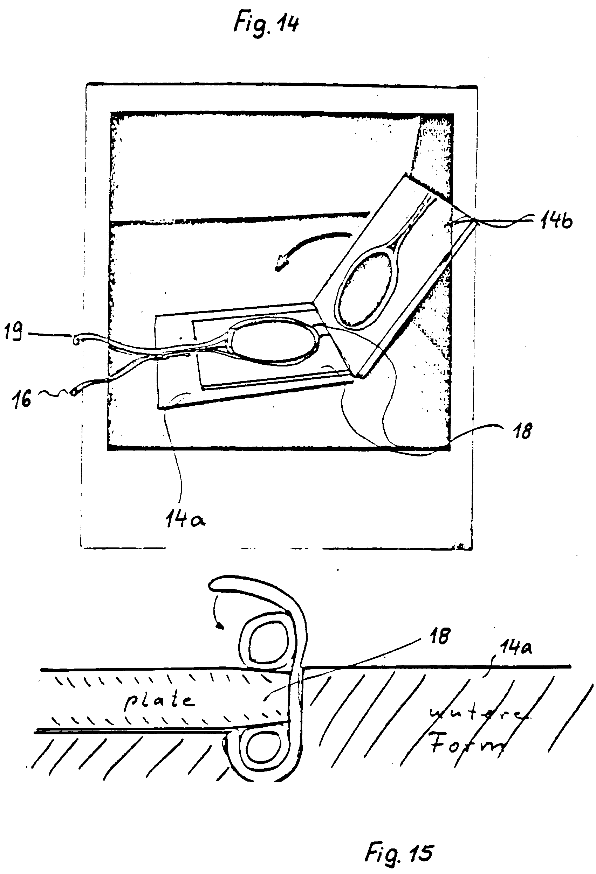

Fig. 14 u.15 zeigen das Einlegen des zweiten Graphit-Epoxyd-Schlauches und des zweiten Steges sowie das Umlegen des inneren Rahmens oder Steges 15 um den zweiten Schlauch, wobei der zweite Schlauch mit 19 bezeichnet ist. Die untere Halbform 14a wirkt mit einer oberen Halbform 14 b zusammen, die in Fig. 14 noch geöffnet ist und gemäß dem Pfeil auf die untere Halbform 14a verschwenkt wird.

Deutlich ist zu erkennen, daß die untere Halbform 14a mit einer Vertiefung zur Aufnahme des einen Randbereiches des inneren Rahmens und eines Schlauches versehen ist, wobei diese untere Form 14a in dem Bereich, in dem der innere Rahmen den späteren Steg bildet, eine Erhöhung gegenüber dem gegenüberliegenden Rand der den ersten Schlauch 16 aufnehmenden Vertiefung hat. Dabei überbrücken die Einlegeplatten 18 den Niveauunterschied innerhalb dieser Form. Die zweite obere Halbform 14b weist eine Vertiefung zur Aufnahme des zweiten Schlauches 19 und des diesen teilweise umhüllenden Randbereiches des Bandes passend zu der ersten Form 14a auf.

Im weiteren Herstellungsverlauf und -verfahren wird die obere Halbform 14b auf die untere Halbform 14a aufgelegt und der erste Schlauch 16 und der zweite Schlauch 19 aufgeblasen. Unter Druck erfolgt ca. 15 Minuten lang das Aushärten des Epoxyd-Harzes im Ofen, also auch unter Wärmeeinwirkung.

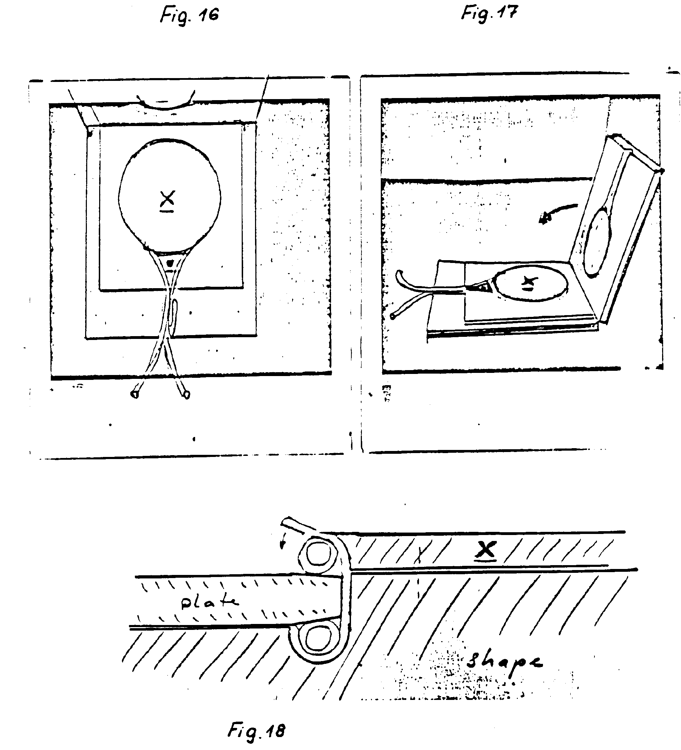

Eine andere Möglichkeit, den eingelegten zweiten Schlauch 19 nebst Steg besser zu fixieren, besteht darin, den in Fig.16 bis 18 mit "X" gekennzeichneten Teil und den mit "."bezeichneten Teil der Form zur Bildung der für die Bespannung im inneren des Rahmens verbleibenden Öffnung und der Öffnung im Bereich der Herzbrücke beweglich zu gestalten und nach dem in Fig. 12 und 13 hergestellten Herstellungsschritt mit Paßstiften an der unteren Form anzubringen.

Bei dem erfindungsgemäßen Schläger 10 um läuft die Nut 13 dessen die Saiten tragenden Teil oder Rahmen ohne Unterbrechung, so daß die Löcher durch den Rahmen möglichst kurz gestaltet werden können und nahezu in Saitenrichtung laufen. Außerdem kann in die Nut 13 ein wesentlich dickeres, weicheres Saitenband 11 eingelegt werden. Dies hat eine bessere Schwingungsdämpfung der Saiten zur Folge, zumal diese nirgens direkt den Rahmen berühren, da im Bereich der Lochungen durch den Steg das Saitenband 11 als Hülsen für die Saiten eingefügt ist. Die erfindungsgemäße Konstruktion ist außerdem gut für eine Einzelaufhängung der Saiten geeignet.

## Patentansprüche

1. Schläger (10), insbesondere Tennis- oder Squashschläger, mit einem Griff (6) und einem zwei parallele Hohlprofile aufweisenden Rahmen (7), wobei die beiden Hohlprofile durch einen Verbindungssteg derart zusammengehalten sind, daß an der Außenseite des Rahmens (7) eine nutförmige Vertiefung (13) gebildet ist, **dadurch gekennzeichnet**, daß die beiden Hohlprofile oder Schläuche über zwei eine Herzbrücke (1) desSchlägers (10) bildende Griffteile (2,3) zusammengeführt sind und in dem Bereich der Herzbrücke (1) der zwischen den Hohlprofilen befindliche Abstand als durchgehende Öffnung (4,5) freigelassen ist und daß ein in der nutförmigen Vertiefung (13) an der Rahmen-Aussenseite befindliches Saiten- oder Hülsenband (11) an der gesamten Außenseite des Rahmens (7) durch die Öffnungen (4,5) der Herzbrücke (1) hindurch umläuft.

2. Schläger nach Anspruch 1, dadurch gekennzeichnet, daß der die beiden Hohlprofile verbindende und auf Abstand haltende Steg etwa in Fortsetzung des Querschnittes der der Rahmenmitte zugewandten inneren Begrenzung der Hohlprofile verläuft und die innere Begrenzung des Rahmens im Bereich der Nut (13) und den Nutengrund bildet und daß die Lochungen zum Verankern der Saiten durch diesen Steg etwa in Saitenrichtung verlaufen.

3. Schläger nach Anspruch 1 oder 2, dadurch gekennzeichnet, daß die Nut (13) durch das schwingungsdämpfende Saitenband (11) ausgefüllt ist.

4. Schläger nach einem der Ansprüche 1 bis 3, dadurch gekennzeichnet, daß der die Nut (13) begrenzende, den inneren Rahmen bildende Steg ein geformtes, zwei voneinander beabstandete, die Hohlprofile bildende Schläuche (16,19) wenigstens teilweise umschließendes, eine Brücke zwischen den beiden Schläuchen bildendes Kunststoffband (15), insbesondere ein Graphit-Epoxyd-Band, ist.

5. Schläger nach einem der Ansprüche 1 bis 4, dadurch gekennzeichnet, daß er Deckel (8,9) zum Verschließen der Öffnungen (4,5) in der Herzbrücke (1) aufweist.

6. Verfahren zur Herstellung eines Schlägers nach einem der vorstehenden Ansprüche, dadurch gekennzeichnet, daß ein Band als Verbindungssteg oder Brücke und zwei in Berührkontakt mit diesem befindliche, durch eine Zwischenplatte oder dergleichen einer Form auf Distanz gehaltene Schläuche in eine Form eingelegt werden, wobei ein erstes Fromteil den einen umgebogenen Rand des Bandes und einen in die Rundung dieses Bandes eingelegten Schlauch aufnimmt und eine Einlegeplatte die Oberseite dieses Schlauches gegenüber einem dem Schlauch benachbarten Absatz abdeckt und daß der zweite Schlauch auf die Oberseite der Einlegeplatte gelegt und von dem überstehenden Randbereich des Bandes zumindest teilweise umschlossen wird, wonach ein zweites Formteil den über der ersten Form und der Einlegeplatte überstehenden Bereich des Bandes und des zweiten Schlauches abdeckt, daß danach beide Schläuche aufgeblasen werden und unter Druck und Wärme gesetzt werden.

7. Vorrichtung zur Durchführung des Verfahrens nach Anspruch 6, dadurch gekennzeichnet, daß sie eine untere Form (14,14a) mit einer Vertiefung zur Aufnahme des einen Randbereiches des inneren Rahmens oder Steges (15) und eines Schlauches (16) aufweist, wobei diese innere Form in dem Bereich, in dem der innere Rahmen den späteren Steg bildet, eine Erhöhung gegenüber dem gegegenüberliegenden Rand der den ersten Schlauch aufnehmenden Vertiefung hat, daß eine Einlegeplatte (18) den Niveauunterschied innerhalb dieser Form überbrückt und daß eine zweite Form (14b) mit einer Vertiefung zur Aufnahme des zweiten Schlauches (10) und des diesen zumindest teilweise umhüllenden Randbereiches des Bandes (15) passend zu der ersten Form vorgesehen ist.

8. Vorrichtung nach Anpsruch 7, dadurch gekennzeichnet, daß die zweite Form eine zusätzliche Einlegeplatte (X) aufweist, die den Berührbereich des Bandes (15) mit dem zweiten Schlauch (19) seitlich beaufschlagt und vorzugsweise mittels Paßstiften oder dergleichen an der unteren Form (14a) fixierbar ist.

## Claims

1. A racket (10), especially a tennis or squash racket, including a handle (6) and a frame (7) having two parallel, hollow sections. the two hollow sections being held together by a connecting web in such a way that a groove-like recess (13) is formed at the outside of the frame (7), **characterized in that** the two hollow sections or tubes are brought together by way of two handle parts (2, 3) forming a throat (1) of the racket (10), and in the area of the throat (1) the space between the hollow sections is left as a through opening (4, 5), and that a band (11) for the strings or a band providing sleeves therefor which is situated in the groove-like recess (13) at the outside of the frame (7) runs right round the outside of the frame and through the openings (4, 5) of the throat (1).

2. A racket as claimed in claim 1, characterized in that the web connecting and spacing the two hollow sections runs approximately in extension of the cross section of the hollow sections at their inner boundary facing the centre of the frame and forms the inner boundary of the frame in the area of the groove (13) and forms the base of the groove, and that the holes for anchoring the strings run through said web approximately in the direction of the strings.

3. A racket as claimed in claim 1 or claim 2, characterized in that the groove (13) is filled by the vibration damping band (11) for the strings.

4. A racket as claimed in any one of claims 1 to 3, characterized in that the web defining the groove and forming the inner frame is a shaped plastic band (15), particularly a graphite-epoxy band. which at least partly surrounds and forms a bridge between the two spaced tubes (16, 19) forming the hollow sections.

5. A racket as claimed in any one of claims 1 to 4, characterized by having covers (8, 9) for closing the openings (4, 5) in the throat (1).

6. A method of manufacturing a racket according to one of the preceding claims, characterized by placing in a mould a band as a connecting web or bridge and two tubes which are in contact with the band and are maintained in spaced relationship by an intermediate plate or the like of a mould, wherein a first mould part receives the one bent over edge of the band and a tube placed in the curvature of said band, and wherein a laid-in plate covers the upper side of said tube towards a shoulder adjacent to the tube, and that the second tube is placed on the upper side of the laid-in plate and is surrounded at least in part by the projecting edge area of the band, after which the band area projecting above the first mould and above the laid-in plate and the second tube are covered by a second mould part, and that then the two tubes are inflated and put under pressure and heat.

7. An apparatus for carrying out the method as claimed in claim 6, characterized by having a lower mould (14, 14a) with a depression for receiving the one edge area of the inner frame or web (15) and a tube (16), in the area in which the inner frame forms the subsequent web said concavity having a raised area relative to the opposite edge of the depression receiving the first tube, that a laid-in plate (18) bridges the difference of level within said mould, and that a second mould (14b) complementary to the first mould is provided with a depression for receiving the second tube (10) and the edge area of the band (15) at least partly enveloping said second tube.

8. An apparatus as claimed in claim 7, characterized in that the second mould has an additional laid-in plate (X) laterally acting upon the band (15) area contacting the second tube (19) and is preferably fixable to the lower mould (14a) by means of locating pins or the like.

## Revendications

1. Raquette (10), notamment de tennis ou de squash, comprenant un manche (6) et un cadre (7) présentant deux profilés creux parallèles, sachant que les deux profilés creux sont maintenus ensemble par une barrette de liaison de manière à former sur le côté extérieur du cadre (7) un creux (13) en forme de rainure, caractérisée en ce que les deux profilés creux ou tubes sont assemblés par le biais de deux parties de manche (2, 3) formant le coeur (1) de la raquette (10) et en ce que dans la zone du coeur (1), l'écart entre les profilés creux est laissé libre en tant qu'ouverture (4, 5), et en ce qu'une bande de cordage ou bande enveloppante (11) se situant dans le creux (13) en forme de rainure sur le côté extérieur du cadre fait tout le tour du côté extérieur du cadre (7) en passant à travers les ouvertures (4, 5) du coeur (1).

2. Raquette selon la revendication 1, caractérisée en ce que la barrette reliant les deux profilés creux et les maintenant écartés s'étend approximativement dans le prolongement de la section transversale de la limite intérieure des profilés creux qui est tournée vers le milieu du cadre et forme la limite intérieure du cadre dans la zone de la rainure (13) et le fond de la rainure, et en ce que les perforations destinées à fixer les cordes à travers la barrette s'étendent approximativement dans la direction du cordage.

3. Raquette selon la revendication 1 ou 2, caractérisée en ce que la rainure (13) est comblée par la bande du cordage (11) amortissant les vibrations.

4. Raquette selon l'une des revendications 1 à 3, caractérisée en ce que la barrette délimitant la rainure (13) et formant le cadre intérieur est une bande de matière plastique (15), notamment une bande de graphite époxyde moulée qui entoure au moins partiellement deux tubes (16, 19) écartés l'un de l'autre et formant les profilés creux, et qui forme un pont entre les deux tubes.

5. Raquette selon l'une des revendications 1 à 4, caractérisée en ce qu'elle présente des couvercles (8, 9) pour fermer les ouvertures (4, 5) dans le coeur (1).

6. Procédé pour fabriquer une raquette selon l'une des revendications précédentes, caractérisé en ce qu'une bande en tant que barrette de liaison ou pont et deux tubes qui sont en contact avec cette bande et qui sont maintenus à distance par une plaque intercalaire ou analogue d'un moule sont placés dans un moule, sachant qu'une première moitié de moule reçoit l'un des bords recourbés de la bande et un tube logé dans la courbure de cette bande et qu'une plaque d'insertion recouvre la face supérieure de ce tube pour le protéger contre un talon adjacent au tube, et en ce que le deuxième tube est placé sur la face supérieure de la plaque d'insertion et est au moins entouré partiellement par la zone de la bande faisant saillie, après quoi une deuxième moitié de moule recouvre la zone de la bande faisant saillie qui se trouve au-dessus du premier moule et de la plaque, et en ce qu'ensuite les deux tubes sont gonflés et soumis à une pression et à la chaleur.

7. Dispositif pour mettre en oeuvre le procédé selon la revendication 6, caractérisé en ce qu'il présente un moule inférieur (14, 14a) muni d'un creux pour y loger l'une des zones inférieures du bord du cadre ou de la barrette (15) inférieur(e) et un tube (16), sachant que ce moule intérieur comporte, dans la zone dans laquelle le cadre intérieur forme plus tard la barrette, une saillie par rapport au bord opposé du creux renfermant le premier tube, en ce qu'une plaque d'insertion (18) compense la différence de niveau à l'intérieur de ce moule, et en ce qu'est prévu un deuxième moule (14b) complémentaire au premier moule, qui est muni d'un creux pour y loger le deuxième tube (10) et la zone du bord de la bande (15) qui entoure au moins partiellement ce dernier.

8. Dispositif selon la revendication 7, caractérisé en ce que le deuxième moule présente une plaque (x) supplémentaire qui sollicite latéralement la zone de contact entre la bande (15) et le deuxième tube (19) et qui peut être fixée au moule inférieur (14a) de préférence au moyen de goujons ou analogues.
